# EUROPÄISCHE PATENTSCHRIFT

(11) **EP 4 061 754 B1**
(45) Veröffentlichungstag und Bekanntmachung des Hinweises auf die Patenterteilung: **26.07.2023**
(21) Anmeldenummer: 20811112.0
(22) Anmeldetag: 17.11.2020
(51) Int. Cl.: B65H 49/08, B23K 9/133, B23K 9/173

(54) **VORRICHTUNG ZUM ENTNEHMEN VON DRAHT VON EINEM DRAHTPAKET**
DEVICE FOR THE REMOVAL OF WIRE FROM A WIRE PACKAGE
DISPOSITIF D'ENLÈVEMENT DU FIL D'UN PAQUET DE FILS

(30) Priorität: 18.11.2019 EP 19020645
(43) Veröffentlichungstag der Anmeldung: 28.09.2022
(73) Patentinhaber: Voestalpine Böhler Welding Germany GmbH, 59067 Hamm (DE)
(72) Erfinder: ANTONOGLOU, Georgios, 48165 Münster (DE); OLBRICH, Thorsten, 44866 Bochum (DE)
(74) Vertreter: Keschmann, Marc
(86) Internationale Anmeldenummer: PCT/IB2020/060800
(87) Internationale Veröffentlichungsnummer: WO 2021/099927

(56) Entgegenhaltungen:
- EP-A1- 2 612 833
- WO-A1-2010/103359
- JP-A- H09 156 827
- US-A1- 2013 119 184

## Beschreibung

Die Erfindung betrifft eine Vorrichtung zum Entnehmen von Draht von einem eine Drahtwicklung aufweisenden Drahtpaket, umfassend ein Drahtbehälter, in dem das die Drahtwicklung aufweisende Drahtpaket angeordnet ist, einen auf dem Drahtpaket angeordneten Auflagering und eine Führung für den vom Drahtpaket abzuziehenden Draht, wobei der Draht an der der Innenwand des Drahtbehälters zugewandten Außenseite des Auflagerings abziehbar ist.

Eine solche Vorrichtung ist beispielsweise in der EP 2 612 833 A1 offenbart. Weitere Vorrichtungen auf dem Gebiet der vorliegenden Erfindung sind in der EP 2 624 976 B1, der DE 628 755 sowie der DE 10 2018 121 943 A1 offenbart.

Die Erfindung betrifft weiters einen Auflagering für eine solche Vorrichtung.

Vorrichtungen zur Entnahme von Drähten von einem Vorrat, insbesondere von einem aufgewickelten Drahtpaket, finden in zahlreichen Bereichen Anwendung. Derartige Vorrichtungen sind aus dem Stand der Technik beispielsweise in Verbindung mit Schweißanlagen bekannt, denen ein Schweißdraht von einem Drahtpaket zugeführt wird. Dabei wird das Drahtpaket in der Regel windungsweise durch die Innenseite eines Auflageringes abgezogen. Bei der Abwicklung derartiger Drähte kann es dazu kommen, dass sich der abzuwickelnde Draht während der Entnahme verknotet und es auf diese Weise zu einem Anlagenstillstand kommt.

Das Drahtpaket bzw. die Drahtwicklung ist in einem Drahtbehälter, z.B. Fass, aufgenommen und hat auf Grund seiner Eigenspannungen das Bestreben, längs der Wicklungsachse unwillkürlich nach oben heraus zu springen. Aus diesem Grund wird ein Auflagering abzugsseitig auf das ringförmig gewickelte Drahtpaket aufgelegt, der das Aufspringen verhindert und den Abzug des Drahtes kontrolliert. Der Abzug des Drahtes erfolgt hierbei nach oben meist durch die Innenseite des Ringes, sodass der Draht um 90° zu seiner Achse umgelenkt werden muss.

Dabei besteht das Problem, dass der abzuziehende Draht, der unterhalb des Auflageringes nach innen über das Drahtpaket geleitet wird, unbeabsichtigt weitere Drahtwindungen mitzieht. Auf Grund seiner Eigenspannungen, bei denen es sich um akkumulierte Torsionsspannungen handelt, hat der Draht das Bestreben sich zu verdrehen bzw. zu verdrillen. Erhält der tordierte, unbeabsichtigt mitgeführte Draht oberhalb des Auflageringes ausreichend Freiraum, kann er sich verwinden und/oder mit anderen Drahtwindungen verschlingen. Durch den weiteren Abzug kann sich die Schlaufe unterhalb einer zumeist vorhandenen Abspulhaube nicht selber lösen und entwickelt sich zu einem Knoten.

Es sind entgegenwirkende Maßnahmen bekannt, die beim Konfektionierungsprozess und beim Einspulprozess ansetzen und beispielsweise die Aufbringung einer Vor-Torsionsspannung des Drahtes oder eine Optimierung der Drahtverlegung bzw. des Wickelbildes umfassen. Die Tendenz des Drahtes zur Bildung von Knoten kann trotz derartiger Maßnahmen auf Grund von gewöhnlichen Fertigungsschwankungen jedoch nicht gänzlich beseitigt werden.

Die vorliegende Erfindung zielt daher darauf ab, eine Vorrichtung der eingangs genannten Art dahingehend zu verbessern, dass das Abziehen des Drahtes ohne jegliche Störungen, insbesondere ohne Knotenbildung, über die gesamte Menge eines Drahtvorrats optimiert und dauerhaft gewährleistet wird.

Zur Lösung dieser Aufgabe besteht die Erfindung bei einer Vorrichtung der eingangs genannten Art im Wesentlichen darin, dass die Führung von einem am Auflagering drehbar gelagerten Drehauge gebildet ist, durch welches der abzuziehende Draht hindurchführbar ist.

Bevorzugt ist das Drehauge hierbei oberhalb des Auflagerings angeordnet.

Dadurch, dass der Draht an der Außenseite des Auflagerings abgezogen und durch ein frei drehbares Drehauge geführt wird, wird eine Führung des Drahtes mit zwei Drahtumlenkpunkten ermöglicht, wobei die Eigenspannung bzw. Biegesteifigkeit des Drahtes dazu ausgenutzt wird, dass der Draht zwischen diesen beiden Umlenkpunkten einen möglichst kontrollierten Verlauf aufweist, der eine Schlingenbildung verhindert.

Die inneren Spannungen bzw. die Biegesteifigkeiten des Drahtes werden zunächst dahingehend ausgenutzt, dass sie bei dem an der Außenseite erfolgenden Drahtabzug zu einer Ausdehnung der Drahtwindungen nach außen gegen die Behälterinnenwand führen. Am Kontaktpunkt des Drahtes an der Behälterinnenwand ergibt sich hierbei der erste Umlenkpunkt. Die weitere Führung des Drahtes wird durch das Drehauge bewerkstelligt, das einen zweiten sich mitdrehenden Umlenkpunkt oberhalb des Drahtpaketes bildet, damit die Eigen- bzw. Biegespannungen den Draht stets an die Behälterinnenwand drücken und ihn einen bestimmten Bogen konstant beschreiben lassen. Die Drehung des Umlenkpunktes um die vertikale Achse des Behälters geschieht automatisch durch die Drahtförderung der Schweißmaschinen. Für die Drehung des Drehauges bedarf es somit keiner weiteren Hilfsmittel.

Dadurch, dass der Draht an der Außenseite abgezogen wird, kann auf den sonst erforderlichen Innenzylinder verzichtet werden, der im Stand der Technik im Inneren des Drahtpakets angeordnet ist und die Führung des von Innen abgezogenen Drahtes unterstützt.

Dadurch, dass der Draht an der Außenseite abgezogen wird, kann auch auf Innenbänder verzichtet werden. Innenbänder erstrecken sich im Drahtbehälter außerhalb des Drahtpakets in axialer Richtung und dienen bei herkömmlichen Ausbildungen dazu, die Abwärtsbewegung des Auflagerings bei fortschreitender Drahtentnahme zu führen. Weiters dienen die Innenbänder bei herkömmlichen Ausführungen dazu, ein Herausspringen des Drahtes nach außen zwischen Außenkante des Auflagerings und Innenwandung des Drahtbehälters zu verhindern, was im Rahmen der vorliegenden Erfindung nicht erforderlich ist, weil der Draht willentlich außen abgezogen wird. Der Auflagering hat im Rahmen der vorliegenden Erfindung lediglich die Funktion die obersten Drahtwicklungen gegen ein nach oben erfolgendes Herausspringen zu sichern, wofür jedoch nur geringe Kräfte und keine exakte Positionierung des Auflagerings erforderlich sind.

Gemäß einer bevorzugten Ausbildung ist vorgesehen, dass die Drahtwicklung eine Wickelachse aufweist und das Drehauge um eine mit der Wickelachse fluchtende erste Drehachse drehbar gelagert ist. Eine solche koaxiale Anordnung der Drahtwicklung und des Drehauges gewährleistet für jede Winkelposition des Drehauges den gleichen radialen Abstand zwischen dem Drehauge und der Außenseite des Drahtpakets, von welcher der Draht abgezogen wird.

Wenn, wie dies einer bevorzugten Ausbildung der Erfindung entspricht, der Auflagering einen im Wesentlichen dem Außendurchmesser des Drahtpakets entsprechenden Außendurchmesser aufweist, wird einerseits ein wirksames Niederhalten der obersten Drahtwicklung gewährleistet und andererseits kann der Draht an der Außenseite des Drahtpakets aus einem definierten Spalt, der sich unterhalb des Rands des Auflagerings ergibt, abgezogen werden.

Wie bereits erwähnt, ist das Drehauge frei drehbar am Auflagering gelagert, sodass es der sich kreisförmig weiterbewegenden Drahtabzugsstelle folgen kann. Der durch das Drehauge sich ergebende Drahtumlenkpunkt ergibt sich hierbei bevorzugt an der den größten Abstand zur ersten Drehachse aufweisenden Stelle des Drehauges. Eine bevorzugte Ausbildung des Drehauges sieht daher vor, dass das Drehauge einen der ersten Drehachse gegenüberliegenden, bevorzugt gekrümmten, Führungsbereich mit einem den größten Abstand zur Wickelachse aufweisenden Scheitelpunkt aufweist. Obwohl der Scheitelpunkt hierbei für gewöhnlich den Umlenkpunkt ausbildet, kann der tatsächliche Umlenkpunkt, d.h. der Kontaktpunkt zwischen dem Draht und dem Drehauge, je nach dem sich beim Abziehen ergebenden Spannungszustand des Drahtes innerhalb des Drehauges, bzw. innerhalb des besagten Führungsbereichs auch wandern.

Es hat sich gezeigt, dass ein erforderlicher Mindestabstand des Scheitelpunkts von der ersten Drehachse günstig ist, um die Mitdrehbewegung des Drehauges dauerhaft zu gewährleisten. Eine bevorzugte Weiterbildung sieht in diesem Zusammenhang vor, dass der durch den Abstand des Scheitelpunkts von der ersten Drehachse definierte Hebelarm wenigstens 1/8, insbesondere wenigstens 1/6, des Außendurchmessers des Drahtpakets beträgt.

Damit der Draht möglichst immer im Führungsbereich, insbesondere im Scheitelpunkt, geführt wird, sieht eine optimierte Geometrie des Drehauges vor, dass das Drehauge sich von den Enden des vorzugsweise gekrümmten Führungsbereichs zur ersten Drehachse erstreckende, im spitzen Winkel auf die erste Drehachse zulaufende Abschnitte aufweist, sodass sich bevorzugt eine tropfen- bzw. trapezförmige Gestalt des Drehauges ergibt.

Dabei ist es bevorzugt, wenn die Außenkontur des Drehauges im Führungsbereich sowie in den daran anschließenden zulaufenden Abschnitten keine Ecken aufweist, die ein ungewolltes Festhalten des Drahtes bei evtl. möglichem Überschlagen des abgezogenen Drahtes verursachen könnten.

Weiters hat es sich als günstig erwiesen, wenn das Drehauge vom Drehlager weg schräg nach oben verläuft. Die Ausrichtung des Drehauges beeinflusst den Umlenkwinkel des Drahtes beim Durchgang durch das Drehauge. Eine besonders bevorzugte Anordnung wird hierbei erreicht, wenn das Drehauge in einer einen Winkel von 20-90°, bevorzugt 30-60°, zur ersten Drehachse verlaufenden Ebene liegt. Dieser Winkelbereich stellt sicher, dass die Umlenkung nicht zu stark ausgeprägt ist, was zu einer Erhöhung der Biegespannung des Drahtes im Bereich zwischen den zwei Umlenkpunkten und daraus folgend zu einer Instabilität führen würde, und dass die Umlenkung gleichzeitig nicht zu gering ist, da andernfalls keine ausreichende Führung gewährleistet wäre.

Alternativ kann das Drehauge vom Drehlager weg auch schräg nach unten verlaufen. Das Drehauge kann dann beispielsweise in einer einen Winkel von 20-90°, bevorzugt 30-60°, zur ersten Drehachse nach unten verlaufenden Ebene liegen.

Wenn, wie dies einer weiteren bevorzugten Ausführung entspricht, der Draht zwischen der an der Außenseite des Drahtpakets liegenden Abzugsstelle und dem Drehauge keine Zwangsführung aufweist, nimmt der Draht selbsttätig jene Position ein, die mit der geringsten Biegespannung verbunden ist, sodass das Risiko einer Verwindung ggf. reduziert wird.

Eine weitere bevorzugte Ausführungsform sieht vor, dass das Drehauge um eine zweite, die erste Drehachse kreuzende Drehachse drehbar gelagert ist. Die freie Drehbarkeit um die zweite Drehachse erlaubt ein Verkippen des Drehauges derart, dass es sich dem Drahtverlauf in Abziehrichtung anpassen und daher in die durch die erste Drehachse definierte Drehrichtung orientiert werden kann, so dass bei einem möglichen Überschlag bzw. anfänglichen Verschlingen der Draht in möglichst günstiger Position orientiert wird, damit er sich selbsttätig wieder entschlingen kann. Insbesondere ist hierbei vorgesehen, dass die zweite Drehachse in der Ebene des Drehauges liegt und sich bevorzugt durch den Scheitelpunkt erstreckt und die erste Drehachse schneidet.

Gemäß einer weiteren bevorzugten Ausführungsform der vorliegenden Erfindung sind am Auflagering flexible Rückhalteelemente festgelegt, die sich über den äußeren Rand des Auflagerings bis zur Innenwand des Drahtbehälters erstrecken und bevorzugt am Drahtbehälter anliegen. Die Rückhalteelemente sind nichts anderes als flexible Stäbchen oder ähnliches, die den Spalt zwischen dem Auflagering und der Innenwand des Drahtbehälters überbrücken und somit einem unkontrollierten Ablaufen von Draht von dem Drahtpaket und durch den Spalt entgegenwirken. Beim gewollten Abziehen von Draht von dem Drahtpaket werden die Rückhaltelemente hingegen durch den Draht einfach weggebogen, sodass der Draht freigegeben wird. Bevorzugt sind über den Umfang verteilt wenigstes drei Rückhalteelemente vorgesehen. Bevorzugt sind die Rückhalteelemente hierbei in regelmäßigen Abständen über den Umfang verteilt.

Bevorzugt ist vorgesehen, dass die Rückhalteelemente ausgehend vom Auflagering eine in Abwickelrichtung weisende Krümmung aufweisen. Diese Ausbildung begünstigt ein federndes Zurückdrücken des jeweiligen Rückhalteelements beim Abziehen des Drahts durch den genannten Spalt, wobei das Zurückdrücken bevorzugt durch Verbiegen in radialer Richtung erfolgt. In axialer Richtung sind die Rückhalteelemente jedoch im Wesentlichen starr ausgebildet oder werden durch Anschlagelemente an einem axialen Ausweichen gehindert. Dies führt dazu, dass die Rückhalteelemente ganze Spulenwicklungen daran hindern, in axialer Richtung über den Spalt zwischen Auflagering und Innenwand des Drahtbehälters unkontrolliert auszutreten.

Hierbei ist es bevorzugt vorgesehen, dass die Rückhalteelemente von an Vorsprüngen des Auflagerings festgelegten Kunststoffstreifen, wie z.B. Kabelbindern, gebildet sind, wobei die Kunststoffstreifen außerhalb der Vorsprünge am Auflagering geführt sind. Der Auflagering weist somit beispielsweise pilzförmige Vorsprünge beziehungsweise Knöpfe auf, an denen die Kunststoffstreifen durch Festziehen ihrer Verschlüsse festgelegt sind. Weiter außen können die Kunststoffstreifen durch Führungen gezogen sein, um ein Verdrehen der Kunststoffstreifen auf den pilzartigen Vorsprüngen und um ein axiales Ausweichen der Kunststoffstreifen zu verhindern.

Wie an sich bekannt, weist der Drahtbehälter bevorzugt eine oberhalb des Drehauges angeordnete Drahtaustrittseinrichtung auf, die vorzugsweise als Abspulhaube ausgebildet ist, welche einen in Abziehrichtung nach innen konvergierenden, insbesondere konischen, Mantel und eine vom Rand des Mantels gebildete, vorzugsweise zentrierte Öffnung zum Abziehen des Drahtes aufweist. Diese zentrierte, an bzw. oberhalb des Drahtbehälters positionierte Öffnung stellt einen dritten Umlenkpunkt dar, der die zuvor beschriebene Wirkweise der Erfindung der Drahtführung weiter optimiert. Dieser Umlenkpunkt liegt auf bzw. sehr nah an der vertikalen ersten Drehachse des Drahtbehälters.

Gemäß einem zweiten Aspekt betrifft die Erfindung einen Auflagering für die oben beschriebene Drahtentnahmevorrichtung, umfassend ein Drehauge, das um die Ringachse drehbar am Auflagering gelagert ist. Bezüglich der bevorzugten Weiterbildungen des Drehauges wird auf die oben im Zusammenhang mit der Drahtentnahmevorrichtung beschriebenen bevorzugten Merkmale des Drehauges bzw. auf die zur erfindungsgemäßen Drahtentnahmevorrichtung gehörenden Unteransprüche verwiesen.

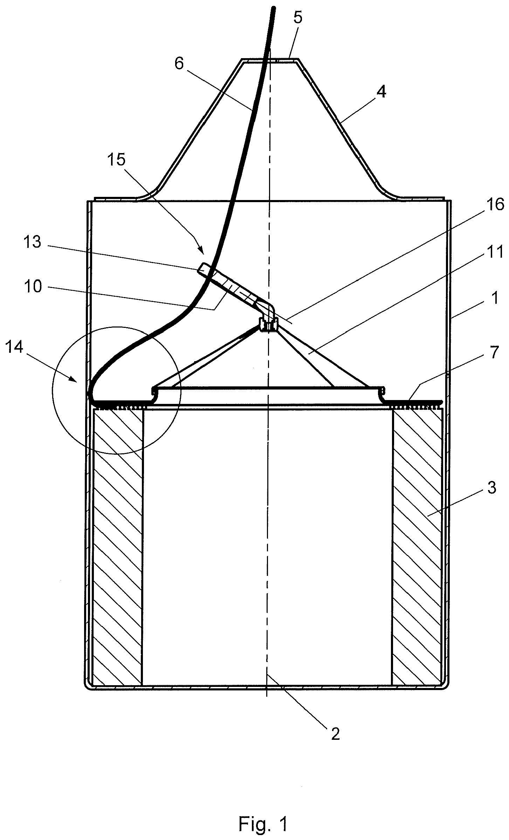

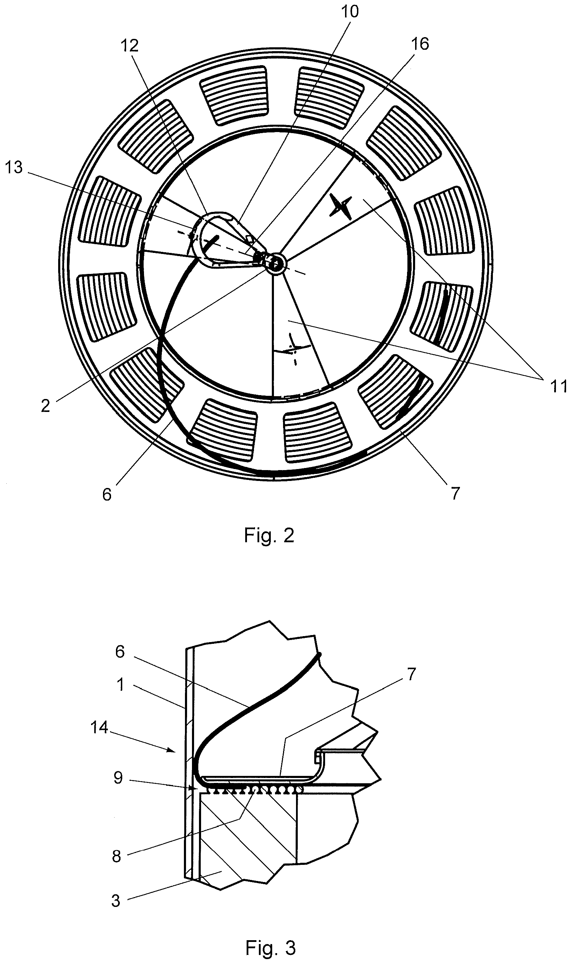

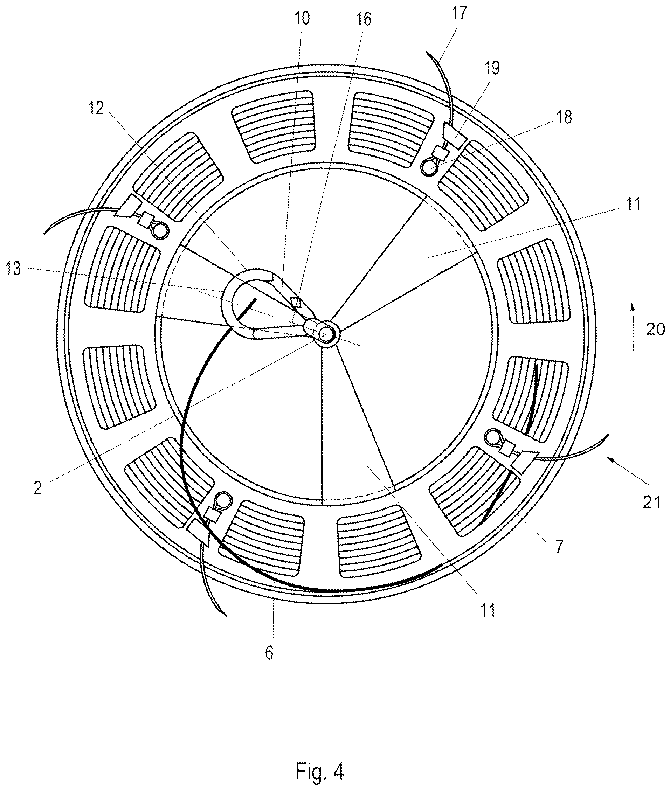

Die Erfindung wird nachfolgend anhand eines in der Zeichnung schematisch dargestellten Ausführungsbeispiels näher erläutert. In dieser zeigen Fig. 1 einen Querschnitt durch eine erfindungsgemäße Drahtentnahmevorrichtung, Fig. 2 eine Draufsicht auf den Auflagering der Drahtentnahmevorrichtung gemäß Fig. 1, Fig. 3 eine Detailansicht der Fig. 1 und Fig. 4 eine abgewandelte Ausbildung in einer Darstellung gemäß Fig. 2.

In Fig. 1 ist ein als Fass ausgebildeter Drahtbehälter mit 1 bezeichnet, welches beispielsweise als Kreiszylinder oder polygones, insbesondere achtseitiges Prisma ausgebildet sein kann und dessen Symmetrieachse mit 2 bezeichnet ist. Im Inneren des Fasses 1 ist ein Drahtpaket 3 aufgenommen, dessen Drahtwicklung eine Wicklungsachse aufweist, die mit der Achse 2 zusammenfällt. Der (an der dicksten Stelle gemessene) Außendurchmesser des Drahtpakets 3 entspricht im Wesentlichen dem Innendurchmesser des Fasses, wobei jedoch ein kleiner Ringspalt vorteilhaft ist, um das Abziehen des Drahtes von der Außenseite des Drahtpakets zu erleichtern. Das Fass 1 trägt eine Abspulhaube 4, die einen in Abziehrichtung nach innen konvergierenden, insbesondere konischen, Mantel und eine vom Rand des Mantels gebildete zentrale Öffnung 5 zum Abziehen des Drahtes 6 aufweist. Auf dem Drahtpaket 3 liegt ein Auflagering 7 auf, der ein Herausspringen der Drahtwicklung nach oben verhindern soll.

Wie in der Detailansicht gemäß Fig. 3 dargestellt, wird der Draht 6 von der obersten Drahtwicklung 8 des Drahtpakets 3 abgezogen, und zwar aus dem Spalt 9, der sich zwischen der Auflagering 7 und dem Drahtpaket 3 ergibt.

Zur Führung des abzuziehenden Drahtes 6 umfasst der Auflagering ein Drehauge 10, welches um die Achse 2 drehbar an Traversen 11 gelagert ist. Das Drehauge ist an einem Drehlager befestigt, welches am Schnittpunkt der sich vom Ringbereich des Auflagerings 7 nach innen und oben erstreckenden Traversen 11 angeordnet ist. In der Draufsicht gemäß Fig. 2 ist erkennbar, dass das Drehauge 10 einen der ersten Drehachse 2 gegenüberliegenden gekrümmten Führungsbereich 12 mit einem den größten Abstand zur ersten Drehachse aufweisenden Scheitelpunkt 13 aufweist. Das Drehauge 10 ist frei drehbar gelagert, sodass es dem sich kreisförmig am Außenumfang des Drahtpakets weiterbewegenden Drahtabzugspunkt folgen kann. Dabei wird der Draht an zwei Stellen umgelenkt. Der erste Umlenkungspunkt 14 befindet sich am Kontaktpunkt des Drahtes an der Innenseite des Fasses 1. Der zweite Umlenkpunkt 15 befindet sich im Führungsbereich 12, insbesondere am Scheitelpunkt 13, des Drehauges 10. Zwischen diesen beiden Umlenkpunkten 14,15 ist keine Zwangsführung vorgesehen, sodass der Draht 6 stets denjenigen Verlauf einnehmen kann, der mit der geringsten Biegespannung verbunden ist.

Das Drehauge 10 ist weiters um eine zweite Drehachse 16 frei drehbar, sodass das Drehauge 10 sich auch in dieser Ebene an den Verlauf des Drahtes 6 anpassen kann.

Der abzuziehende Draht 6 wird wegen der Führung durch das Drehauge 10 unterhalb des Auflageringes 7 in seiner Orientierung zu den weiteren Windungen des Drahtpakets 3 im Winkel verschränkt, sodass er nicht mehr parallel zu den anderen Windungen orientiert ist und stets über den Windungen der obersten Drahtlage 8 hergeführt wird. Durch dieses Prinzip kann der abzuziehende Draht 6 keine weiteren Windungen mitziehen und diese z.B. nicht zu einer Schlaufe zusammenziehen. Des Weiteren dient das um die erste Drehachse 2 drehbare Drehauge 10 als Führung, damit die akkumulierenden Torsionsspannungen den abzuziehenden Draht 6 nicht verwinden lassen können.

In Figur 4 ist zu erkennen, dass am Auflagering 7 flexible Rückhalteelemente 17 festgelegt sind, die sich über den äußeren Rand des Auflagerings 7 erstrecken und deren freie Enden an der Innenwand des Drahtbehälters 1 anliegen können. Die Rückhalteelemente 17 weisen vom Auflagering 7 ausgehend eine in Abwickelrichtung 20 gerichtete Krümmung auf und sind in Richtung des Pfeils 21, d.h. in radialer Richtung, elastisch nachgiebig, sodass der abzuziehende Draht beim Durchtritt durch den Spalt zwischen Auflagering und Innenwand des Drahtbehälters auf Grund seiner Bewegung in Abwickelrichtung 20 das jeweilige Rückhalteelement federnd zurückdrückt.

Die Rückhalteelemente 17 sind in radialer Richtung 21 nachgiebig, in axialer Richtung jedoch im Wesentlichen starr ausgebildet oder werden durch Anschlagelemente an einem axialen Ausweichen gehindert. Dies führt dazu, dass die Rückhalteelemente 17 ganze Spulenwicklungen daran hindern, in axialer Richtung über den Spalt zwischen Auflagering und Innenwand des Drahtbehälters unkontrolliert auszutreten.

Die Rückhalteelemente 17 sind bei der in Fig. 4 dargestellten Ausführungsform an Vorsprüngen 18 des Auflagerings 7 befestigt und sind am Auflagering 7 durch Führungsbrücken 19 geführt, welche die genannten axialen Anschlagelemente ausbilden. In besonders einfacher Weise können die Rückhalteelemente 17 von Kabelbindern gebildet sein, die an den Vorsprüngen 18 befestigt sind.

## Patentansprüche

1. Vorrichtung zum Entnehmen von Draht von einem eine Drahtwicklung aufweisenden Drahtpaket (3), umfassend einen Drahtbehälter (1), in dem das die Drahtwicklung aufweisende Drahtpaket (3) angeordnet ist, einen auf dem Drahtpaket (3) angeordneten Auflagering (7) und eine Führung für den vom Drahtpaket (3) abzuziehenden Draht (6), wobei der Draht (6) an der der Innenwand des Drahtbehälters (1) zugewandten Außenseite des Auflagerings (7) abziehbar ist, **dadurch gekennzeichnet, dass** die Führung von einem am Auflagering (7) drehbar gelagerten Drehauge (10) gebildet ist, durch welches der abzuziehende Draht (6) hindurchführbar ist.

2. Vorrichtung nach Anspruch 1, **dadurch gekennzeichnet, dass** die Drahtwicklung eine Wickelachse (2) aufweist und das Drehauge (10) um eine mit der Wickelachse (2) fluchtende erste Drehachse (2) drehbar gelagert ist.

3. Vorrichtung nach Anspruch 1 oder 2, **dadurch gekennzeichnet, dass** der Auflagering (7) einen im Wesentlichen dem Außendurchmesser des Drahtpakets (3) entsprechenden Außendurchmesser aufweist.

4. Vorrichtung nach Anspruch 2 oder 3, **dadurch gekennzeichnet, dass** das Drehauge (10) einen der ersten Drehachse (2) gegenüberliegenden, bevorzugt gekrümmten, Führungsbereich (12) mit einem den größten Abstand zur Wickelachse (2) aufweisenden Scheitelpunkt (13) aufweist.

5. Vorrichtung nach Anspruch 4, **dadurch gekennzeichnet, dass** der durch den Abstand des Scheitelpunkts (13) von der ersten Drehachse (2) definierte Hebelarm wenigstens 1/8, insbesondere wenigstens 1/6, des Außendurchmessers des Drahtpakets (3) beträgt.

6. Vorrichtung nach Anspruch 4 oder 5, **dadurch gekennzeichnet, dass** das Drehauge (10) sich von den Enden des bevorzugt gekrümmten Führungsbereichs (12) zur ersten Drehachse (2) erstreckende, im spitzen Winkel auf die erste Drehachse (2) zulaufende Abschnitte aufweist.

7. Vorrichtung nach einem der Ansprüche 1 bis 6, **dadurch gekennzeichnet, dass** das Drehauge (10) vom Drehlager weg schräg nach oben verläuft.

8. Vorrichtung nach Anspruch 7, **dadurch gekennzeichnet, dass** das Drehauge (10) in einer einen Winkel von 20-90°, bevorzugt 30-60°, zur ersten Drehachse (2) verlaufenden Ebene liegt.

9. Vorrichtung nach einem der Ansprüche 1 bis 8, **dadurch gekennzeichnet, dass** der Draht (6) zwischen der an der Außenseite des Drahtpakets (3) liegenden Abzugsstelle und dem Drehauge (10) keine Zwangsführung aufweist.

10. Vorrichtung nach einem der Ansprüche 1 bis 9, **dadurch gekennzeichnet, dass** der Drahtbehälter (1) eine oberhalb des Drehauges (10) angeordnete Drahtaustrittseinrichtung aufweist, die vorzugsweise als Abspulhaube (4) ausgebildet ist, welche einen in Abziehrichtung nach innen konvergierenden, insbesondere konischen, Mantel und eine vom Rand des Mantels gebildete zentrierte Öffnung (5) zum Abziehen des Drahtes (6) aufweist.

11. Vorrichtung nach einem der Ansprüche 1 bis 10, **dadurch gekennzeichnet, dass** das Drehauge (10) um eine zweite, die erste Drehachse (2) kreuzende Drehachse (16) drehbar gelagert ist.

12. Vorrichtung nach Anspruch 11, **dadurch gekennzeichnet, dass** die zweite Drehachse (16) in der Ebene des Drehauges (10) liegt und sich bevorzugt durch den Scheitelpunkt (13) erstreckt und die erste Drehachse (2) schneidet.

13. Vorrichtung nach einem der Ansprüche 1 bis 12, **dadurch gekennzeichnet, dass** am Auflagering (7) flexible Rückhalteelemente (17) festgelegt sind, die sich über den äußeren Rand des Auflagerings (7) bis zur Innenwand des Drahtbehälters (1) erstrecken und bevorzugt am Drahtbehälter (1) anliegen.

14. Vorrichtung nach Anspruch 13, **dadurch gekennzeichnet, dass** die Rückhalteelemente (17) ausgehend vom Auflagering (7) eine in Abwickelrichtung weisende Krümmung aufweisen.

15. Auflagering (7) für eine Vorrichtung nach einem der Ansprüche 1 bis 14, umfassend ein Drehauge (10), das um die Ringachse (2) drehbar am Auflagering (7) gelagert ist.

## Claims

1. Device for withdrawing wire from a wire pack (3) having a wire winding, comprising a wire container (1) in which the wire pack (3) having the wire winding is arranged, a support ring (7) arranged on the wire pack (3) and a guide for the wire (6) to be withdrawn from the wire pack (3), wherein the wire (6) can be drawn off at the outer side of the support ring (7) facing the inner wall of the wire container (1), **characterized in that** the guide is formed by a rotary eye (10) which is rotatably mounted on the support ring (7) and through which the wire (6) to be drawn off can be guided.

2. Device according to claim 1, **characterized in that** the wire winding has a winding axis (2) and the rotary eye (10) is mounted rotatably about a first axis of rotation (2) aligned with the winding axis (2).

3. Device according to claim 1 or 2, **characterized in that** the support ring (7) has an outer diameter substantially corresponding to the outer diameter of the wire pack (3).

4. Device according to claim 2 or 3, **characterized in that** the rotary eye (10) has a guide region (12) opposite the first axis of rotation (2), preferably curved, with an apex (13) having the greatest distance from the winding axis (2) .

5. Device according to claim 4, **characterized in that** the lever arm defined by the distance of the apex (13) from the first axis of rotation (2) is at least 1/8, in particular at least 1/6, of the outer diameter of the wire pack (3).

6. Device according to claim 4 or 5, **characterized in that** the rotary eye (10) has sections extending from the ends of the preferably curved guide region (12) to the first axis of rotation (2) and converging at an acute angle towards the first axis of rotation (2).

7. Device according to any one of claims 1 to 6, **characterized in that** the rotary eye (10) extends obliquely upwards away from the rotary bearing.

8. Device according to claim 7, **characterized in that** the rotary eye (10) lies in a plane extending at an angle of 20-90°, preferably 30-60°, to the first axis of rotation (2) .

9. Device according to any one of claims 1 to 8, **characterized in that** the wire (6) has no constraining guide between the draw-off point located on the outside of the wire pack (3) and the rotary eye (10).

10. Device according to any one of claims 1 to 9, **characterized in that** the wire container (1) has a wire outlet device arranged above the rotary eye (10), which is preferably designed as an unwinding hood (4), which has an inwardly converging, in particular conical, jacket in the unwinding direction and a centered opening (5) formed by the edge of the jacket for unwinding the wire (6).

11. Device according to any one of claims 1 to 10, **characterized in that** the rotary eye (10) is mounted rotatably about a second axis of rotation (16) intersecting the first axis of rotation (2).

12. Device according to claim 11, **characterized in that** the second axis of rotation (16) lies in the plane of the rotary eye (10) and preferably extends through the apex (13) and intersects the first axis of rotation (2).

13. Device according to any one of claims 1 to 12, **characterized in that** flexible retaining elements (17) are fixed to the support ring (7), which extend over the outer edge of the support ring (7) to the inner wall of the wire container (1) and preferably bear against the wire container (1).

14. Device according to claim 13, **characterized in that** the retaining elements (17), starting from the support ring (7), have a curvature pointing in the unwinding direction.

15. Support ring (7) for a device according to any one of claims 1 to 14, comprising a rotary eye (10) which is mounted on the support ring (7) such that it can rotate about the ring axis (2).

## Revendications

1. Dispositif pour retirer du fil d'un paquet de fil (3) ayant un enroulement de fil, comprenant un conteneur de fil (1) dans lequel le paquet de fil (3) ayant l'enroulement de fil est agencé, un anneau de support (7) agencé sur le paquet de fil (3), et un guide pour le fil (6) à retirer du paquet de fil (3), le fil (6) pouvant être retiré à la face externe de l'anneau de support (7) faisant face à la paroi interne du conteneur de fil (1), **caractérisé en ce que** le guide est formé d'un oeillet rotatif (10) monté mobile en rotation à l'anneau de support (7), à travers lequel le fil (6) à retirer peut être passé.

2. Dispositif selon la revendication 1, **caractérisé en ce que** l'enroulement de fil présente un axe d'enroulement (2) et l'oeillet rotatif (10) est monté mobile en rotation autour d'un premier axe de rotation (2) aligné avec l'axe d'enroulement (2).

3. Dispositif selon la revendication 1 ou 2, **caractérisé en ce que** l'anneau de support (7) présente un diamètre extérieur qui correspond essentiellement au diamètre extérieur du paquet de fil (3).

4. Dispositif selon la revendication 2 ou 3, **caractérisé en ce que** l'oeillet rotatif (10) présente une zone de guidage (12) de préférence incurvée opposée au premier axe de rotation (2), ayant un sommet (13) qui est le plus éloigné de l'axe d'enroulement (2).

5. Dispositif selon la revendication 4, **caractérisé en ce que** le bras de levier défini par la distance entre le sommet (13) et le premier axe de rotation (2) est au moins 1/8, notamment au moins 1/6, du diamètre extérieur du paquet de fil (3).

6. Dispositif selon la revendication 4 ou 5, **caractérisé en ce que** l'oeillet rotatif (10) présente des tronçons s'étendant depuis les extrémités de la zone de guidage (12) de préférence incurvée jusqu'au premier axe de rotation (2) et se rétrécissant vers le premier axe de rotation (2) à angle aigu.

7. Dispositif selon l'une des revendications 1 bis 6, **caractérisé en ce que** l'oeillet rotatif (10) s'éloigne obliquement vers le haut du palier rotatif.

8. Dispositif selon la revendication 7, **caractérisé en ce que** l'oeillet rotatif (10) se situe dans un plan faisant un angle de 20-90°, de préférence de 30-60°, par rapport au premier axe de rotation (2).

9. Dispositif selon l'une des revendications 1 bis 8, **caractérisé en ce que** le fil (6) n'a pas de guidage forcé entre le point de retraction situé à l'extérieur du paquet de fil (3) et l'oeillet rotatif (10).

10. Dispositif selon l'une des revendications 1 bis 9, **caractérisé en ce que** le conteneur de fil (1) présente un dispositif de sortie de fil qui est disposé au-dessus de l'oeillet rotatif (10), et qui est de préférence réalisé sous la forme d'un capot de déroulement (4) qui présente une gaine de forme convergeant vers l'intérieur, notamment conique, et une ouverture (5) centrale formée par le bord de la gaine pour le retrait du fil (6).

11. Dispositif selon l'une des revendications 1 bis 10, **caractérisé en ce que** l'oeillet rotatif (10) est monté mobile en rotation autour d'un deuxième axe de rotation (16) traversant le premier axe de rotation (2).

12. Dispositif selon la revendication 11, **caractérisé en ce que** le deuxième axe de rotation (16) est situé dans le plan de l'oeillet rotatif (10) et s'étend de préférence à travers le sommet (13) et coupe le premier axe de rotation (2).

13. Dispositif selon l'une des revendications 1 bis 12, **caractérisé en ce que** des éléments de retenue (17) flexibles sont fixés à l'anneau de support (7), et s'étendent sur le bord extérieur de l'anneau de support (7) jusqu'à la paroi intérieure du conteneur de fil (1), et sont de préférence en butée contre le conteneur de fil (1).

14. Dispositif selon la revendication 13, **caractérisé en ce que** les éléments de retenue (17), partant de l'anneau de support (7), présentent une courbure orientée dans le sens de déroulement.

15. Anneau de support (7) pour un dispositif selon l'une des revendications 1 bis 14, comprenant un oeillet rotatif (10) qui est monté sur l'anneau de support (7) de manière à pouvoir tourner autour de l'axe de l'anneau (2).
